(19) Europäisches Patentamt
European Patent Office
Office européen des brevets

(11) Veröffentlichungsnummer: **0 247 465**
**A2**

(12) # EUROPÄISCHE PATENTANMELDUNG

(21) Anmeldenummer: **87107119.7**

(22) Anmeldetag: **16.05.87**

(51) Int. Cl.[4]: **C 08 L 67/02**, C 08 L 69/00

(30) Priorität: **21.05.86 DE 3617070**

(43) Veröffentlichungstag der Anmeldung: **02.12.87**
**Patentblatt 87/49**

(84) Benannte Vertragsstaaten: **BE DE FR GB NL**

(71) Anmelder: **BASF Aktiengesellschaft,**
**Carl-Bosch-Strasse 38, D-6700 Ludwigshafen (DE)**

(72) Erfinder: **Lausberg, Dietrich, Dr., Nachtigalstrasse 32 a, D-6700 Ludwigshafen (DE)**
Erfinder: **Taubitz, Christof, Dr., In der Dreispitz 15, D-6706 Wachenheim (DE)**
Erfinder: **Knoll, Manfred, Pfrimmstrasse 1, D-6521 Wachenheim (DE)**

(54) **Thermoplastische Formmassen aus Polyester und Polycarbonat.**

(57) Thermoplastische Formmassen, enthaltend als wesentliche Komponenten

A) 10 bis 89 Gew.-% einer Mischung aus

$A_1$) 20 bis 98 Gew.-%, bezogen auf $A_1) + A_2)$ eines Polyesters einer aromatischen Dicarbonsäure und einer aliphatischen Dihydroxyverbindung und

$A_2$) 2 bis 80 Gew.-%, bezogen auf $A_1) + A_2)$, eines Polyesters einer aromatischen Dicarbonsäure und einer aromatischen Dihydroxyverbindung der allgemeinen Formel I

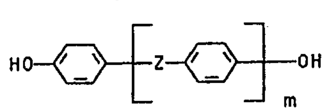 (I)

oder deren kernsubstituierten $C_1$–$C_6$-Alkyl- oder Halogenderivaten wobei

Z eine Alkylen- oder Cycloalkylengruppe mit bis zu 8 C-Atomen, eine Arylengruppe mit bis zu 12 C-Atomen, –O–, –S–,

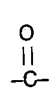

oder eine chemische Bindung darstellt und

m den Wert 0 oder 1 hat,

B) 10 bis 89 Gew.-% eines Polycarbonats und

C) 1 bis 30 Gew.-% eines schlagzäh modifizierenden Kautschuks mit einer Glasübergangstemperatur von unter −30 °C.

EP 0 247 465 A2

Thermoplastische Formmassen aus Polyester und Polycarbonat

Die Erfindung betrifft thermoplastische Formmassen, enthaltend als wesentliche Komponenten

A) 10 bis 89 Gew.% einer Mischung aus

$A_1$) 20 bis 98 Gew.%, bezogen auf $A_1$)+$A_2$) eines Polyesters einer aromatischen Dicarbonsäure und einer aliphatischen Dihydroxiverbindung und

$A_2$) 2 bis 80 Gew.%, bezogen auf $A_1$)+$A_2$), eines Polyesters einer aromatischen Dicarbonsäure und einer aromatischen Dihydroxyverbindung der allgemeinen Formel I

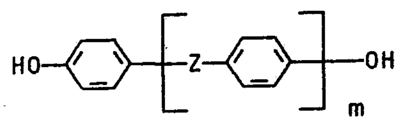 (I)

oder deren kernsubstituierten $C_1$-$C_6$-Alkyl- oder Halogenderivaten, wobei

Z eine Alkylen- oder Cycloalkylengruppe mit bis zu 8 C-Atomen, eine Arylengruppe mit bis zu 12 C-Atomen, -O-, -S-,

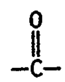

oder eine chemische Bindung darstellt und

m den Wert 0 oder 1 hat,

B) 10 bis 89 Gew.% eines Polycarbonats und

C) 1 bis 30 Gew.% eines schlagzäh modifizierenden Kautschuks mit einer Glasübergangstemperatur von unter -30°C.

Weiterhin betrifft die Erfindung die Verwendung der erfindungsgemäßen Formmassen zur Herstellung von Formkörpern und die daraus erhältlichen Formkörper.

Mischungen aus Polyestern und Polycarbonaten sind aus der DE-A-24 17 002 bekannt. Diese weisen gegenüber den reinen Polyestern verbesserte mechanische Eigenschaften auf.

Der Zusatz von Polymerisaten mit einer Glasübergangstemperatur von unter $0^oC$, z.B. Pfropfkautschuken auf Acrylat-, Ethylen-, oder Butadienbasis, zu Polyester/Polycarbonat-Mischungen ist aus den EP-A-25 920, WO 80/972, EP-A-114 288, DE-A-23 43 609, US-A-4 172 859, DE-A-33 10 754 und DE-A-32 27 028 bekannt.

In der DE-A-34 32 412 werden thermoplastische Formmassen aus Polyestern, Polycarbonaten und Pfropfkautschuken beschrieben, wobei der Polyester aus einem Diol mit mindestens einer Diarylsulfongruppe und gegebenenfalls zusätzlich einem aliphatischen Diol aufgebaut ist.

Alle diese beschriebenen Formmassen weisen eine befriedigende Schlagzähigkeit auf, doch ist ihre Wärmeformbeständigkeit für manche Anwendungszwecke unzureichend.

Aufgabe der vorliegenden Erfindung war es daher, thermoplastische Formmassen aus Polyestern und Polycarbonaten zur Verfügung zu stellen, die neben einer guten Schlagzähigkeit bei tiefen Temperaturen auch eine gute Wärmeformbeständigkeit aufweisen.

Diese Aufgabe wird erfindungsgemäß gelöst durch die eingangs definierten thermoplastischen Formmassen.

Als Komponente A) enthalten die erfindungsgemäßen Formmassen eine Mischung aus

$A_1$) 20 bis 98 Gew.%, bezogen auf $A_1$)+$A_2$), eines Polyesters einer aromatischen Dicarbonsäure und einer aliphatischen Dihydroxyverbindung und

$A_2$) 2 bis 80 Gew.%, bezogen auf $A_1$)+$A_2$) eines Polyesters einer aromatischen Dicarbonsäure und einer aromatischen Dihydroxyverbindung.

Die in den erfindungsgemäßen Formmassen enthaltenen Polyester $A_1$ sind an sich bekannt und in der Literatur beschrieben. Sie enthalten einen aromatischen Ring in der Hauptkette, der von der aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 Mol.% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester $A_1$) sind Polyalkylenterephthalate, die sich von Alkandiolen mit 2 bis 6 C-Atomen ableiten, zu nennen. Von diesen werden insbesondere Polyethylenterephthalat und Polybutylenterephthalat bevorzugt.

Die relative Viskosität der Polyester $A_1$) liegt im allgemeinen im Bereich von 1,2 bis 1,8 (gemessen in einer 0,5 gew.%igen Lösung in einem Phenol/o-Dichlorbenzol-Gemisch (Gew.-Verh. 1:1) bei 25°C).

Die als wesentliche Komponente in den erfindungsgemäßen Formmassen enthaltenen voll aromatischen Polyester $A_2$) leiten sich von aromatischen Dicarbonsäuren und aromatischen Dihydroxyverbindungen ab.

Als aromatische Dicarbonsäuren eignen sich die bereits bei der Komponente $A_1$) beschriebenen Verbindungen. Bevorzugt werden Mischungen aus 5 bis 100 Mol.% Isophthalsäure und 0 bis 95 % Terephthalsäure, insbesondere etwa äquivalente Mischungen dieser beiden Säuren.

Die aromatischen Dihydroxyverbindungen haben die allgemeine Formel

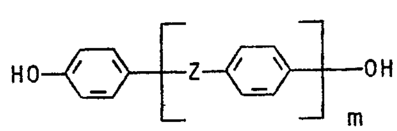

oder deren kernsubstituierte $C_1$-$C_6$-Alkyl- oder Halogenderivate, wobei Z eine Alkylen- oder Cycloalkylengruppe mit bis zu 8 C-Atomen, eine Arylengruppe mit bis zu 12 C-Atomen,

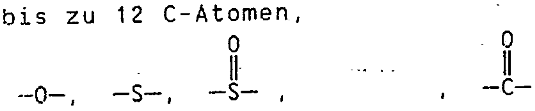 oder

eine chemische Bindung darstellt und m den Wert 0 oder 1 hat.

Beispielsweise seien
Dihydroxydiphenyle,
Di-(hydroxyphenyl)alkane,
Di-(hydroxyphenyl)cycloalkane,
Di-(hydroxyphenyl)sulfide,
Di-(hydroxyphenyl)ether,
Di-(hydroxyphenyl)ketone,
Di-(hydroxyphenyl)sulfoxide,
$\alpha,\alpha'$-Di-(hydroxyphenyl)-dialkylbenzole,
Resorcin und
Hydrochinon sowie deren kernalkylierte oder kernhalogenierte Derivate genannt.

Von diesen werden

4,4'-Dihydroxydiphenyl,
2,4-Di-(4'-hydroxyphenyl)-2-methylbutan
$\alpha,\alpha'$-Di-(4-hydroxyphenyl)-p-diisopropylbenzol,
2,2-Di(3'-methyl-4'-hydrxyphenyl)propan und
2,2-Di-(3'-chlor-4'-hydroxyphenyl)propan, insbesondere

2,2-Di-(4'-hydroxyphenyl)propan
2,2-Di(3',5'-dichlordihydroxyphenyl)propan,
1,1-Di-(4'-hydroxyphenyl)cyclohexan und
2,2-Di-(3',5'-dimethyl-4'-hydroxyphenyl)propan oder deren Mischungen bevorzugt.

Der Anteil des voll-aromatischen Polyesters $A_2$) an der Komponente A) beträgt 2 bis 80, bevorzugt 2 bis 60 und insbesondere 3 bis 50 Gew.%, bezogen auf die Gesamtmenge der Komponenten $A_1$)+$A_2$).

Die Polycarbonate B) sind an sich ebenfalls bekannt und in der Literatur beschrieben.

Vorzugsweise können diese Polycarbonate durch Umsetzung von Kohlensäurederivaten wie Phosgen oder Diphenylcarbonat mit Diphenolen hergestellt werden. Grundsätzlich sind alle Diphenole verwendbar, wie sie z.B. in der Monographie von H. Schnell, "Chemistry and Physics of Polycarbonates", Interscience Publishers, 1964 sowie der US-A-2 999 835 und der DE-A-22 48 817 genannt sind. Dihydroxydiphenyl, Di-(hydroxyphenyl)-alkane und Di-(hydroxyphenyl)ether oder deren Mischungen sind besonders bevorzugte Diphenole.

Ein besonders bevorzugtes Diphenol ist 2,2-Di-(4'-hydroxyphenyl)propan (Bisphenol A). Dies kann auch in Mischung mit anderen Diphenolen wie 2,2-Di-(4'-hydroxyphenyl)pentan, 2,6-Dihydroxynaphthalin, 4,4'-Dihydroxydiphenylsulfon, Di-(4-hydroxyphenyl)ether, Di-(4-hydroxyphenyl)sulfit, Di-(4-hydroxyphenyl)methan, 1,1-Di-(4'-hydroxyphenyl)ethan oder 4,4-Dihydroxydiphenyl eingesetzt werden. Der Anteil an Bisphenol A in derartigen Mischungen liegt im allgemeinen im Bereich von 70 bis 98 Gew.%.

Verfahren zur Herstellung derartiger Polycarbonate sind an sich bekannt und z.B. in den bereits erwähnten US-A-2 999 835 und DE-A-22 48 817 sowie den DE-A-13 00 266 und DE-A-14 95 730 beschrieben.

Die relative Viskosität der Polycarbonate B) liegt im allgemeinen im Bereich von 1,2 bis 1,5, vorzugsweise 1,28 bis 1,40 dl/g, gemessen in 0,5 gew.%iger Lösung in Dichlormethan bei 25°C.

Der Anteil der Polycarbonate B) beträgt 10 bis 89, vorzugsweise 20 bis 78 und insbesondere 40 bis 65 Gew.%, bezogen auf das Gesamtgewicht der Komponenten A) bis C).

Als Komponente C) enthalten die erfindungsgemäßen thermoplastischen Formmassen 1 bis 30, vorzugsweise 2 bis 25, insbesondere 5 bis 15 Gew.%, bezogen auf das Gesamtgewicht der Komponenten A) bis C) eines die Schlagzähigkeit erhöhenden Elastomeren (Kautschuks) mit einer Glasübergangstemperatur von unter -30°C, vorzugsweise von unter -40°C.

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-kautschuke zu nennen, die vorzugsweise

ein Verhältnis von Ethylenresten zu Propylenresten im Bereich von 40:60 bis 65:35 aufweisen.

Die Mooney-Viskositäten (MLI+4/100°C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie 1,4-Butadien, 1,4-Hexadien, 1,5-Hexadien, 2,5-Dimethyl-1,5-hexadien und 1,4-Octadien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden 1,5-Hexadien, 5-Ethyliden-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM- bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe bevorzugter Kautschuke sind Copolymere des Ethylens mit Acrylsäure- und/oder Methacrylsäureestern, insbesondere solche die zusätzlich noch Epoxy-Gruppen enthalten. Diese Epoxygruppen werden vorzugsweise durch Zugabe von Epoxygruppen enthaltenden Monomeren der allgemeinen Formeln II oder III zum Monomerengemisch in den Kautschuk eingebaut

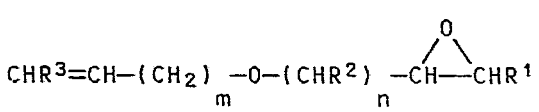 (II)

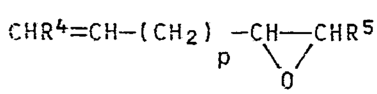 (III)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Bevorzugt sind $R^1$, $R^2$ und $R^3$ Wasserstoff, m hat den Wert 0 oder 1 und n ist 1. Die entsprechenden Verbindungen sind Alkylglycidylether oder Vinylglycidylether.

Bevorzugte Beispiele für Verbindungen der Formel II sind Epoxygruppenenthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

| | |
|---|---|
| 50 bis 98, insbesondere 60 bis 95 Gew.% | Ethylen, |
| 1 bis 40, insbesondere 3 bis 20 Gew.% | Glycidylacrylat und/oder Glycidylmethacrylat, |
| 1 bis 45, insbesondere 10 bis 35 Gew.% | n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte Elastomere (Kautschuke) C) sind weiterhin Pfropfcopolymerisate mit Butadien, Butadien/Styrol-, Butadien/Acrylnitril und Acrylestern als Pfropfgrundlage, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk C) können auch Pfropfpolymerisate aus

25 bis 98 Gew.% eines Acrylatkautschuks mit einer Glasübergangstemperatur von unter -20°C als Pfropfgrundlage

und

2 bis 75 Gew.% eines copolymerisierbaren ethylenisch ungesättigten Monomeren, dessen Homo- bzw. Copolymerisate eine Glasübergangstemperatur von mehr als 25°C aufweisen, als Pfropfauflage

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C weisen eine Glasübergangstemperatur von unter -30°C, insbesondere von unter -40°C auf, was zu einer guten Schlagzähigkeit auch bei tiefen Temperaturen führt.

Es versteht sich, daß auch Mischungen der vorstehend aufgeführten Kautschuktypen eingesetzt werden können.

Neben den wesentlichen Komponenten A) bis C) können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A) bis C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, faser- und pulverförmige Füll- und Verstärkungsmittel, Keimbildungsmittel und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden. Darüber hinaus können die erfindungsgemäßen Formmassen faser- und pulverförmige Füllstoffe und Verstärkungsmittel, wie Kohlenstoffasern, Glasfasern, amorphe Kieselsäure, Asbest, Calciumsilicat, Calciummetasilicat, Magnesiumcarbonat, Kaolin, Kreide, gepulverten Quarz, Glimmer, Feldspat in Mengen bis zu 50 Gew.%, bezogen auf die Komponenten A) bis C) enthalten. Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Komponenten A) bis C) angewandt werden.

Die erfindungsgemäßen thermoplastischen Formmassen können hergestellt werden, indem man die Komponenten A) und B) und ggf. Zusatzstoffe mischt und in einer üblichen Mischvorrichtung, wie Schneckenextruder, Brabender-Mühle oder Banbury-Mühle die Elastomeren (Kautschuke) C) in das schmelzflüssige Gemisch aus Polyester und Polycarbonat einmischt. Die Masse kann anschließend extrudiert, gekühlt und zerkleinert werden. Die Mischtemperaturen liegen in der Regel bei 240 bis 280°C.

Die erfindungsgemäßen Formmassen eignen sich zur Herstellung von hochbeanspruchbaren thermostabilen schlagzähen Formteilen für technische Zwecke aller Art nach dem Spritzguß- oder Extrusionsverfahren.

Sie zeichnen sich durch eine besonders gute Kälteschlagzähigkeit bei gleichzeitig guter Wärmeformbeständigkeit aus.

<u>Beispiele</u>

Zur Herstellung erfindungsgemäßer Formmassen wurden folgende Komponenten eingesetzt:

Komponente $A_1$
Polyethylenterephthalat mit einer relativen Viskosität von 1,38 (0,5 gew.%ige Lösung in Phenol/o-Dichlorbenzol 1:1 bei 25°C).

Komponente $A_1$'
Polybutylenterephthalat mit einer relativen Viskosität von 1,6 (bestimmt wie bei $A_1$).

Komponente $A_2$
Polyester aus Bisphenol A und Iso-/Terephthalsäure (äquimolares Verhältnis) mit einer relativen Viskosität von 0,66, gemessen an 0,2 gew.%iger Lösung in Chloroform bei 49°C.

Komponente B
Polycarbonat auf Bisphenol A-Basis mit einer relativen Viskosität von 1,36 (0,5 gew.%ig in Dichlormethan bei 25°C).

Komponente C/1
Copolymerisat aus Ethylen/n-Butylacrylat/Acrylsäure (Gewichtsverhältnis 66:30:4) mit einer Glasübergangstemperatur von -42°C und einem Schmelzindex (190°C/2,16 kg Belastung) von 15 g/10 min.

Komponente C/2
Copolymerisat aus Ethylen/n-Butylacrylat/Glycidylmethacrylat (Gewichtsverhältnis 67/30/3) mit einer Glasübergangstemperatur von -48°C.

Komponente C/3
Pfropfkautschuk mit einer Pfropfgrundlage (75 Gew.%) aus vernetztem n-Butylacrylat und einer Pfropfhülle (25 Gew.%) aus Styrol und Acrylnitril im Gewichtsverhältnis 75/25 (hergestellt nach dem Verfahren der DE 24 44 584).

Komponente C4
Pfropfkautschuk mit einer Pfropfgrundlage (70 Gew.%) aus vernetztem Polybutadien, 8 Gew.% einer ersten Pfropfhülle aus Styrol und 22 Gew.% einer zweiten Pfropfhülle aus Methylmethacrylat, mit einer Glasübergangstemperatur von -78°C.

Die Komponenten A) bis C) wurden intensiv gemischt, in einem Zweischneckenextruder bei 270°C aufgeschmolzen, homogenisiert und die Schmelze wurde in ein Wasserbad extrudiert. Nach Granulierung und

Trocknung wurden aus den Formmassen auf einer Spritzgußmaschine Prüfkörper hergestellt und ohne Nachbehandlung geprüft.

Die Ergebnisse der Kerbschlagzähigkeitsmessungen nach DIN 53 453 und der Bestimmung der Vicat B-Temperatur nach DIN 53 460 sind der nachfolgenden Tabelle zu entnehmen.

Zum Vergleich wurden in den Beispielen I bis V Formmassen ohne die Komponenten $A_2$ hergestellt.

Die Ergebnisse zeigen die verbesserte Schlagzähigkeit bei erhöhter Wärmeformbeständigkeit der erfindungsgemäßen Formmassen mit der Komponente $A_2$) im Vergleich zu Formmassen ohne die Komponente $A_2$).

Tabelle: (Mengenangaben in Gew.%)

| Nr. | $A_1$ | $A_1'$ | $A_2$ | B | C | Kerbschlagzähigkeit DIN 53 453 $a_K$ [kJ/m²] -20°C | -40°C | Vicat B DIN 53 460 [°C] |
|---|---|---|---|---|---|---|---|---|
| I | 40 | - | - | 50 | 10 C/2 | 15,2 | 6,3 | 133 |
| II | - | 40 | - | 50 | 10 C/4 | 14,0 | 8,2 | 120 |
| III | 20 | 20 | - | 50 | 5 C/3 | 14,5 | 8,0 | 122 |
| IV | 20 | 20 | - | 50 | 5 C/1 | 13,2 | 6,1 | 121 |
| V | 20 | - | - | 70 | 10 C/2 | 22 | 12 | 134 |
| 1 | - | 30 | 10 | 50 | 10 C/2 | 20,2 | 10,6 | 126 |
| 2 | - | 20 | 20 | 50 | 10 C/2 | 25,6 | 11,3 | 131 |
| 3 | - | 10 | 30 | 50 | 10 C/2 | 32,4 | 15,2 | 137 |
| 4 | 10 | 10 | 20 | 50 | 6 C/4<br>4 C/1 | 33,5 | 16,7 | 140 |
| 5 | 20 | - | 20 | 50 | 6 C/4<br>4 C/1 | 26,5 | 14,2 | 142 |
| 6 | 10 | - | 30 | 50 | 10 C/3 | 31,2 | 9,6 | 147 |
| 7 | 20 | - | 20 | 50 | 10 C/2 | 24,8 | 12,2 | 142 |
| 8 | 30 | - | 10 | 50 | 10 C/2 | 18,9 | 10,8 | 137 |
| 9 | 10 | - | 10 | 70 | 10 C/4 | 33,6 | 16,5 | 146 |
| 10 | 5 | - | 15 | 70 | 10 C/3 | 27,2 | 11,4 | 151 |
| 11 | - | 10 | 10 | 70 | 5 C/1<br>5 C/2 | 28,4 | 13,1 | 143 |

Patentansprüche

1. Thermoplastische Formmassen enthaltend als wesentliche Komponenten

A) 10 bis 89 Gew.% einer Mischung aus

$A_1$) 20 bis 98 Gew.%, bezogen auf $A_1$)+$A_2$) eines Polyesters einer aromatischen Dicarbonsäure und einer aliphatischen Dihydroxyverbindung und

$A_2$) 2 bis 80 Gew.%, bezogen auf $A_1$)+$A_2$), eines Polyesters einer aromatischen Dicarbonsäure und einer aromatischen Dihydroxyverbindung der allgemeinen Formel I

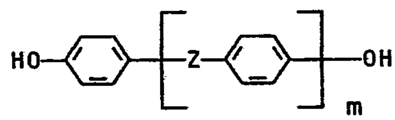
(I)

oder deren kernsubstituierten $C_1$-$C_6$-Alkyl- oder Halogenderivaten, wobei

Z eine Alkylen- oder Cycloalkylengruppe mit bis zu 8 C-Atomen, eine Arylengruppe mit bis zu 12 C-Atomen, -O-, -S-,

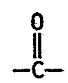

oder eine chemische Bindung darstellt und

m den Wert 0 oder 1 hat,

B) 10 bis 89 Gew.% eines Polycarbonats und

C) 1 bis 30 Gew.% eines schlagzäh modifizierenden Kautschuks mit einer Glasübergangstemperatur von unter -30°C.

2. Verwendung der thermoplastischen Formmassen gemäß Anspruch 1 zur Herstellung von Formkörpern.

3. Formkörper, erhältlich aus Formmassen gemäß Anspruch 1 als wesentlichen Komponenten.